Europäisches Patentamt

European Patent Office    (11) Numéro de publication : **0 198 738**

Office européen des brevets    **B1**

(19)

(12)    # FASCICULE DE BREVET EUROPÉEN

(45) Date de publication du fascicule du brevet :
**17.08.88**

(21) Numéro de dépôt : **86400566.5**

(22) Date de dépôt : **18.03.86**

(51) Int. Cl.⁴ : **B 65 G 67/20, B 65 G   7/04**

(54) Procédé et installation de manutention et de transfert de charges palettisées ou containerisées, notamment en vue du chargement et du déchargement de véhicules.

(30) Priorité : **10.04.85 FR 8505358**

(43) Date de publication de la demande :
**22.10.86 Bulletin 86/43**

(45) Mention de la délivrance du brevet :
**17.08.88 Bulletin 88/33**

(84) Etats contractants désignés :
**BE CH DE GB IT LI NL SE**

(56) Documents cités :
**DE-A- 2 739 130**
**FR-A- 2 155 787**
**FR-A- 2 404 581**
**GB-A-   917 668**

(73) Titulaire : **Luneau, Gérard**
**1, rue des Gâte-Ceps**
**F-92210 Saint Cloud (FR)**

(72) Inventeur : **Luneau, Gérard**
**1, rue des Gâte-Ceps**
**F-92210 Saint Cloud (FR)**

(74) Mandataire : **Marquer, Francis et al**
**Cabinet Moutard 35, Avenue Victor Hugo**
**F-78960 Voisins le Bretonneux (FR)**

### Description

L'invention se rapporte aux installations destinées à effectuer le chargement de trains de palettes ou de containers munis de pieds sur un camion ou autre véhicule banalisé et le déchargement du véhicule, sans que le quai de chargement ou de déchargement doive être muni d'équipements spécialisés.

Une solution connue pour le transfert de telles charges consiste à utiliser un transpalette muni d'une fourche qui se glisse sous la charge, la soulève et la déplace. Le transpalette ne transportant qu'une ou deux charges à la fois, cette solution est longue et onéreuse.

Un autre dispositif, connu sous le nom de « pelle à gâteau », comprend un convoyeur à rouleaux de faible diamètre qui s'avance en porte à faux sur le véhicule à charger, puis s'efface de dessous la charge en maintenant la charge sur le véhicule. Un tel dispositif ne peut charger qu'à faible distance et charge le véhicule par ses côtés. Il ne peut servir au déchargement.

Les dispositifs connus à coussins d'air ou à jets d'air nécessitent un équipement approprié du plancher du véhicule à charger. Il en est de même pour les dispositifs connus à plateformes roulantes ou à convoyeurs.

Les dispositifs à ponts gerbeurs, qui amènent des chargements globaux de palettes de part et d'autre des véhicules, exigent que ceux-ci soient ouvrables sur leurs grands côtés.

L'état le plus proche de la technique est constitué par DE-A-2 739 130 qui décrit un procédé de manutention et de transfert de charges telles que palettes et containers munis de pieds, comportant la mise en œuvre d'un chariot muni d'un organe élévateur apte à se glisser sous la charge pour la soulever, ledit chariot étant agencé pour venir se placer sous la charge et comportant des moyens d'attelage à des chariots identiques pour constituer des files linéaires de chariots ; une machine étant agencée pour stocker un nombre prédéterminé de files linéaires, ladite machine étant munie de moyens de positionnement par rapport aux charges et le procédé comportant successivement :

— le contrôle de la mise en place des charges pour qu'elles couvrent une bande de rangement allongée dont la longueur correspond à celle d'une file de chariots et la largeur, à celle de l'espace occupé par lesdites files de chariots à l'axe longitudinal de ladite bande coïncidant avec celui d'un véhicule à charger ou à décharger ou celui de toute autre aire de transfert ;

— la mise en place des files de chariots sous les charges ;

— la mise en position haute des organes élévateurs des chariots pour soulever les charges ;

— le déplacement, vers l'avant pour un chargement, vers l'arrière pour un déchargement, suivant l'axe de ladite bande, de l'ensemble des files de chariots chargés ; et

— à la fin du transfert, la remise des organes élévateurs des chariots en position basse et le retrait des files de chariots.

L'invention se propose de pallier les inconvénients des dispositifs connus et de réaliser une installation qui permette un chargement ou un déchargement relativement rapides en occupant une place relativement faible sur le quai et en autorisant le convoyage des charges sur un sol pouvant présenter des irrégularités constituant des obstacles au roulement.

Suivant l'invention, ce résultat est obtenu au moyen d'un procédé qui comporte la mise en œuvre d'un chariot automoteur muni d'un organe élévateur apte à se glisser sous la charge pour la soulever, ledit chariot étant agencé pour venir se placer sous la charge et comportant des moyens d'attelage à des chariots identiques pour constituer des files linéaires de chariots ; une machine d'accumulation étant agencée pour stocker un nombre prédéterminé de files linéaires en couches superposées ou, de préférence, juxtaposées, ladite machine étant munie de moyens de déplacement autonome et de moyens de positionnement par rapport aux charges et de contrôle du gabarit de celles-ci, et le procédé comportant successivement :

— le contrôle de la mise en place des charges pour qu'elles couvrent une bande de rangement allongée dont la longueur correspond à celle d'une file de chariots et la largeur à celle de l'espace occupé par lesdites files de chariots lorsqu'elles sont déployées à partir de la machine d'accumulation, l'axe longitudinal de ladite bande coïncidant avec celui d'un véhicule à charger ou à décharger ou celui de toute autre aire de transfert ;

— la mise en place de la machine d'accumulation remplie desdites files de chariots à l'arrière des charges ainsi préparées et dans l'axe de ladite bande ;

— l'extraction des files de chariots de la machine d'accumulation et leur mise en place sous les charges, par commande de la mise en service des moteurs desdits chariots ;

— la mise en position haute des organes élévateurs des chariots pour soulever les charges ;

— le déplacement simultané, vers l'avant pour un chargement, vers l'arrière pour un déchargement, suivant l'axe de ladite bande, de l'ensemble des files de chariots chargés et de la machine d'accumulation ; et

— à la fin du transfert, la remise des organes élévateurs des chariots en position basse et la réintroduction des files de chariots dans la machine d'accumulation.

L'invention a encore pour objet une machine d'accumulation spécialement conçue et agencée pour la mise en œuvre dudit procédé.

Ses diverses particularités, ainsi que ses avantages, apparaîtront clairement à la lumière de la description ci-après.

Au dessin annexé :

La figure 1 illustre les phases respectives de mise en œuvre du procédé ;

La figure 2 est une vue schématique en plan d'un ensemble de palettes mises en place en vue de leur transfert ;

Les figures 3 à 5 représentent un mode d'exécution préféré d'un chariot, respectivement en élévation, vu de bout et en plan ;

Les figures 6 et 7 représentent schématiquement un mode d'exécution préféré des moyens d'attelage entre deux chariots ; et

Les figures 8 à 10 représentent schématiquement un mode d'exécution préféré de la machine d'accumulation des files de chariots, respectivement vue en élévation, en plan et de profil.

La première phase du procédé est la préparation des charges.

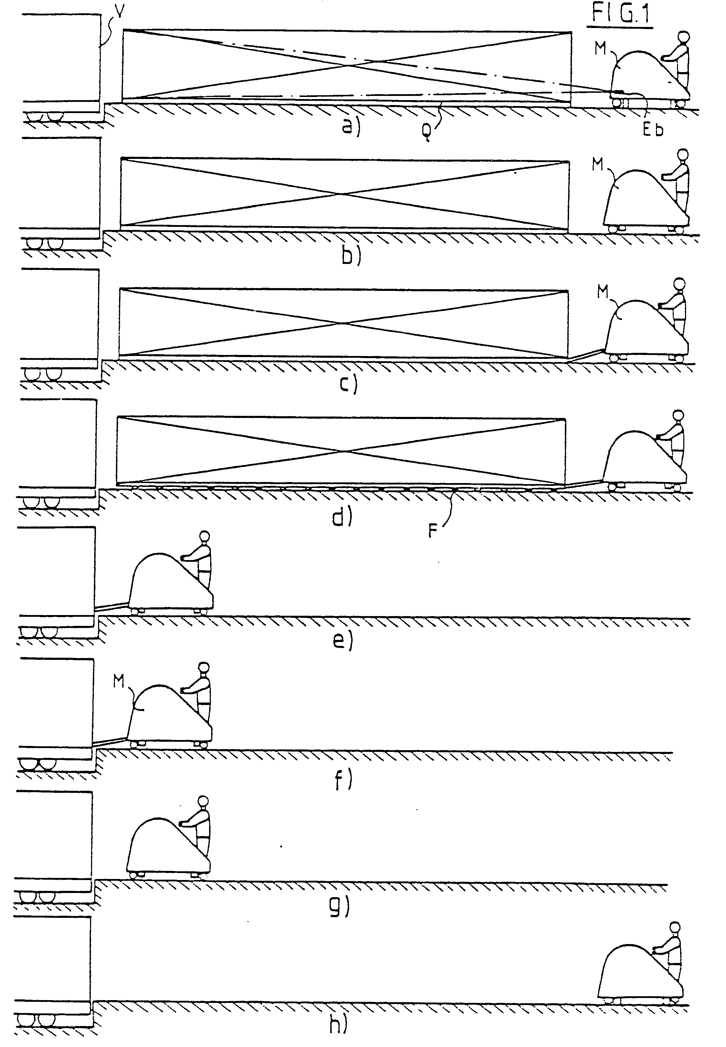

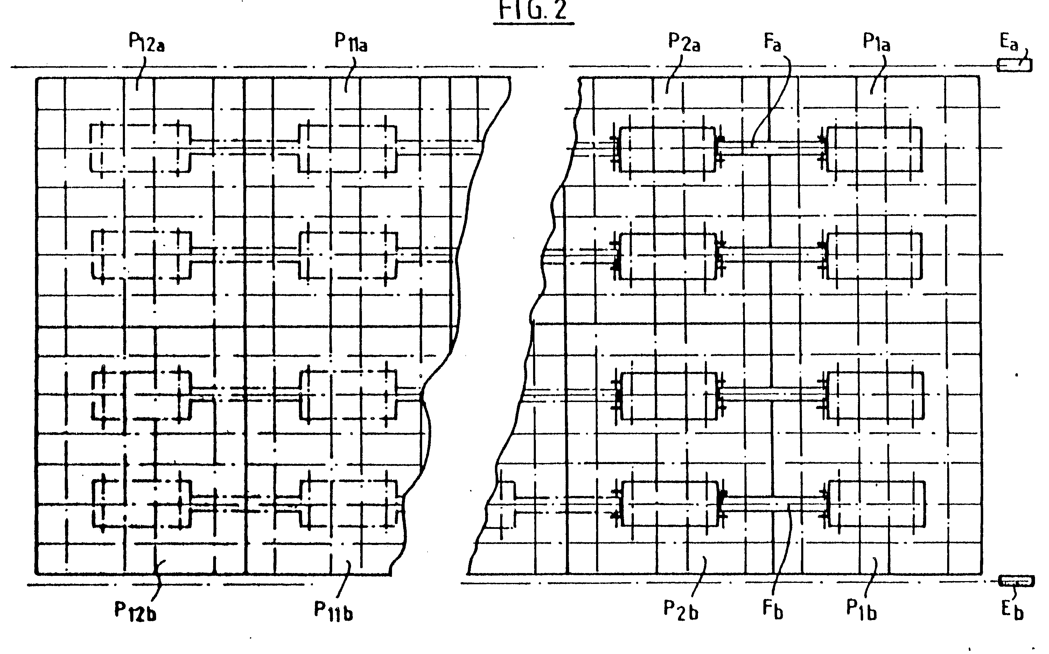

La figure 2 montre un ensemble de deux trains ($P_{1a}$ à $P_{12a}$ et $P_{1b}$ à $P_{12b}$) de douze palettes chacun (seules les palettes extrêmes des trains sont visibles au dessin). L'exemple considéré, destiné à illustrer le procédé, est celui de palettes normalisées $1\,000 \times 1\,200$. Les deux trains juxtaposés forment une façade de 2 m 40 et sont, par exemple, destinés à être chargés dans un véhicule (V, figure 1) de 2 m 44 de large, dont le plan de chargement est au niveau du quai Q sur lequel ledit ensemble a été rangé. Une fois le rangement des palettes effectué, des contrôles de positionnement et de gabarits doivent être effectués.

A cet effet, deux émetteurs laser ($E_a$ et $E_b$, figure 2 : seul $E_b$ est visible à la figure 1) émettent deux faisceaux parallèles susceptibles d'effectuer un balayage dans deux plans verticaux parallèles respectifs qui encadrent la bande de rangement. (Dans l'exemple considéré, celle-ci a une largeur de 2 m 40 et lesdits plans seront distants de $2\,420$ mm $\pm$ 10 mm l'un de l'autre). Le balayage laser permet de vérifier que la machine d'accumulation M est bien positionnée, de façon à pouvoir déployer les files de chariots dans l'axe de la bande de rangement, et que ce dernier axe coïncide lui-même avec celui du véhicule. Elle permet aussi de vérifier le gabarit de l'ensemble des charges.

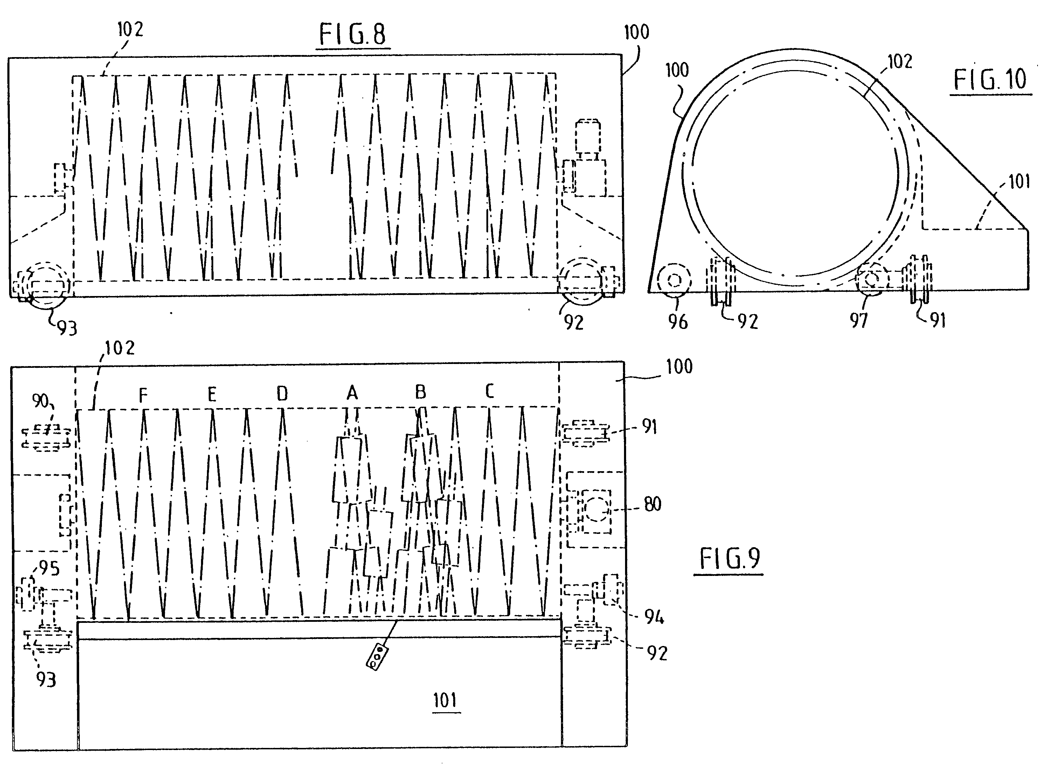

La coquille 100 de la machine, comme le montre la figure 10, comporte avantageusement, à l'arrière, un marche-pied réglable 101 qui permet à l'opérateur d'avoir ses yeux à environ 2 m 30 du sol, pour dominer la charge et voir si les faisceaux laser éclairent le fond du véhicule.

La figure 1 montre en (a) la machine M positionnée derrière la charge, face au véhicule. Ladite machine est munie de moyens autonomes de déplacement horizontal transversal, c'est-à-dire parallèlement à la largeur de la bande de rangement. En (b), on suppose qu'un tel déplacement a amené la machine M dans l'axe de ladite bande et du véhicule. La phase illustrée en (c) correspond au déploiement des files de chariots qui viennent s'introduire par les entrées des palettes, c'est-à-dire les passages compris entre le plateau supérieur de celles-ci et les traverses qui relient les pieds. Les palettes ayant deux entrées libres sur leurs faces perpendiculaires à l'axe de la bande, on a représenté, à la figure 2, deux files de chariots par train de palettes.

L'opérateur commande ensuite, depuis son poste sur la machine, le levage des plateaux supérieurs des palettes par les organes élévateurs des chariots, phase illustrée en (d) à la figure 1. Cette commande pourrait, en variante, être automatique.

Ensuite (phase terminée en (e)), il commande la translation simultanée des files de chariots chargées et de la machine à la même vitesse, qui pourra par exemple être de l'ordre de 6 à 12 m/min, pour obtenir un parcours aller et retour du chariot de tête (soit 24 m) en 4 à 2 min.

Les files de chariots chargées sont ainsi mises en place sur le plan de chargement du véhicule, tandis que la machine M reste sur le quai. Au cours de la phase (f), l'opérateur commande l'abaissement des plateaux supérieurs des palettes, de façon à poser la charge, à la suite de quoi il commande (phase g) la rentrée des files de chariots dans la coquille. Enfin (phase (h)), la machine ainsi chargée est renvoyée en position d'attente de chargement ou de déchargement.

L'opération de déchargement du camion suit une procédure du même genre, mais, bien entendu, l'introduction sous charge et le levage de la charge s'effectuent sur le plan de chargement du véhicule et la pose de la charge s'effectue sur le quai.

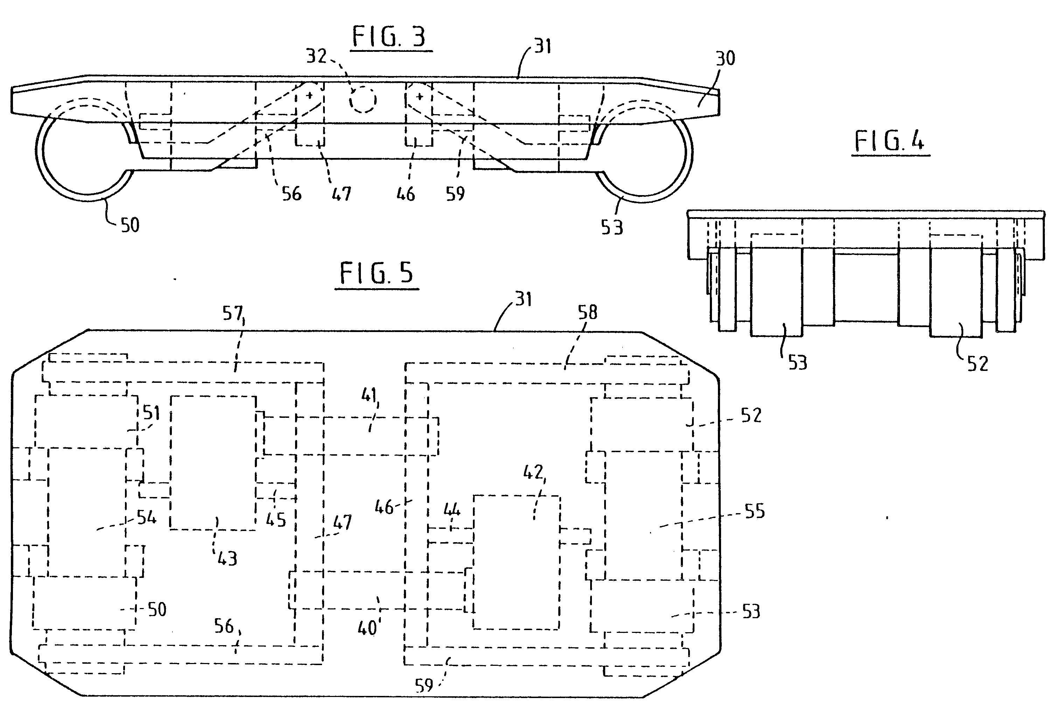

Le chariot, du genre bogie, représenté aux figures 3 à 5, comporte un châssis 30 de support d'un plateau 31 et quatre roues 50 à 53 (avantageusement en matière plastique) dont les roues 50 et 52 sont, par exemple, des roues libres, les roues 51 et 53 étant motrices et entraînées par des moteurs 54-55 respectivement. Sur les arbres des roues 50 à 53 sont montées folles des biellettes 56 à 59 dont les extrémités supérieures viennent s'appuyer sous le plateau 31.

Deux moteurs 40, 41 entraînent, par l'intermédiaire de réducteurs 42-43 qui comportent un dispositif, connu en soi, de transformation du mouvement de rotation en translation lente d'axes 44-45 respectivement. Les axes 44-45 sont solidaires de traverses respectives 46-47 dont la translation, dans le sens approprié, a pour effet de soulever l'extrémité des paires de biellettes respectives, qui soulèvent ainsi le plateau 31 lorsque les moteurs 40-41 sont mis en service avec le sens de rotation approprié. La rotation inverse des moteurs provoque la retombée des biellettes et du plateau. Les moteurs 40-41 et 54-55 sont alimentés et commandés à partir de la machine M.

La hauteur libre de passage d'une palette étant, dans l'exemple considéré, égale à 100 mm, on fixera par exemple la hauteur des bogies à 75 mm. Lorsque les bogies prennent appui au sol, le plateau supérieur de la palette à soulever est à 122 mm du sol. Si on s'impose de lever de 35 mm, cela signifie que le plateau du bogie devra être soulevé de $122 + 35 - 75 = 80$ mm. Pour les bogies des files extrêmes ($F_a$ et $F_b$, figure 2) le plateau se soulèvera de 39 - 40 mm au lieu de 35.

Cette particularité a pour but de créer une force horizontale vers l'axe des charges globales et d'éviter un écartement latéral des produits pallettisés.

Pour pouvoir passer dans les entrées libres des palettes, les bogies auront par exemple une largeur hors tout de 220 mm. La distance entre les axes des roues avant et arrière sera déterminée pour que celles-ci prennent appui sur le sol, sans risque de monter sur une traverse. Toutefois, on munira avantageusement le bogie d'un moyen de contrôle de la position horizontale du plateau et de coupure de l'alimentation des moteurs de levage 40-41 dès que l'inclinaison du plateau dépasse par exemple 2°,5. La réalisation de tels moyens, symbolisés par un cercle 32 à la figure 3, est à la portée de l'homme du métier.

Avantageusement, la face avant des bogies de tête sera équipée de lames coupantes (non figurées) pour ouvrir le passage des files de bogies sous les palettes enveloppées d'un film de protection.

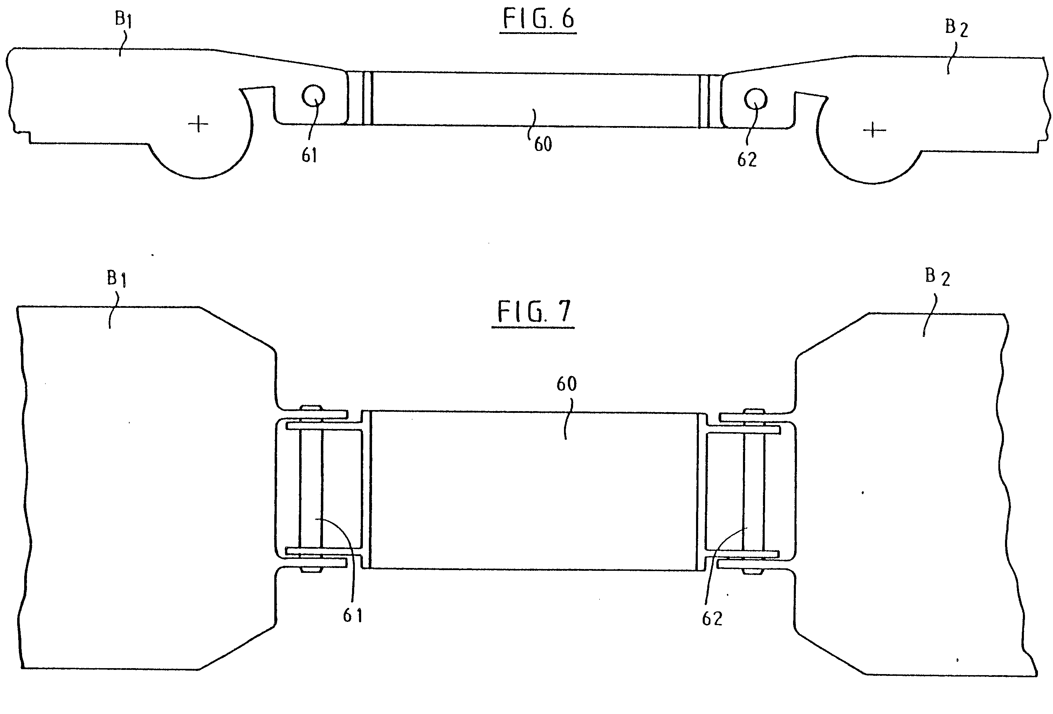

Aux figures 6 et 7, on a représenté schématiquement les moyens d'attelage entre deux bogies successifs $B_1$, $B_2$.

Il s'agit de « traits d'union » 60 articulés aux extrémités des bogies autour d'axes horizontaux 61-62 pour permettre le rangement des files de bogies dans la coquille de la machine M et conférer aux files de bogies la souplesse nécessaire au franchissement des obstacles, tels qu'aspérités ou différences de niveaux des quais de raccordement.

Par contre, le trait d'union doit être agencé pour conférer aux files de bogies une rigidité linéaire pour que leur déploiement sous le train de palettes et vers le véhicule à charger se fasse sans trop diverger par rapport à l'axe défini par les faisceaux laser.

Une autre fonction des moyens d'attelage est d'incorporer, en vue de leur protection, les circuits d'alimentation en énergie et de commande des moteurs de bogies. Ces circuits, non représentés, sont réalisés sous la forme de conducteurs électriques ou de conduites de fluide souples qui partent de la machine M et sont logés dans les traits d'union et dans le châssis des bogies.

On notera enfin que, pour une longueur prédéterminée du bogie, la longueur des traits d'union sera choisie pour que les centres des bogies coïncident avec ceux des charges.

Aux figures 8 à 10, on a représenté schématiquement un tambour cylindrique 102 logé dans la coquille 100 de la machine et entraîné en rotation autour d'un axe horizontal par un ensemble moteur-réducteur 80.

Les bogies de queue des files sont amarrés par des moyens non figurés en quatre ou six des points d'attache A-B-C-D-E-F répartis le long d'une génératrice du tambour. La rotation du tambour amène les six derniers bogies de la file et leurs moyens d'attelage à s'enrouler sur une portion hélicoïdale de la surface du tambour au cours d'une première révolution complète de celui-ci. Au cours d'une seconde révolution, les six premiers bogies de chaque file viennent s'enrouler sur une seconde portion de bande hélicoïdale de la surface du tambour qui fait suite à la précédente. En fait, comme le montre la figure 10, deux bogies reposent sur le plancher de la coquille, si bien que la file n'occupe pas complètement deux tours complets de tambour, ce qui évite de gêner l'enroulement de la file adjacente, dont les deux portions de bande se juxtaposent à celles de la file précédente et de la file suivante.

Comme le montre la figure 9, les files ABC d'une part, DEF d'autre part sont inclinées en sens inverse et disposées symétriquement par rapport au plan de symétrie médian du tambour perpendiculaire à son axe. Grâce à cette disposition, les files, en cas de déformation, auront tendance, lors de leur redéploiement sur le sol, à converger vers l'axe du chargement, améliorant ainsi la stabilité du chargement global.

Le moteur 80 du tambour ne sert qu'à entraîner en rotation la masse propre de celui-ci, mais, aussi bien pour l'entrée que pour la sortie des files de bogies, ce sont les moteurs des bogies qui entraînent ceux-ci : les bogies prennent appui sur des zones d'adhérence situées sur la surface du tambour ou sur le fond de la coquille 100.

Le déplacement autonome de la machine dans le sens axial met en œuvre quatre roues 90-93 commandées par des moto-réducteurs 94-95, tandis que son déplacement autonome dans le sens latéral en vue de son positionnement met en œuvre quatre roues telles que 96-97.

**Revendications**

1. Procédé de manutention et de transfert de charges telles que palettes et containers munis de pieds, comportant la mise en œuvre d'un chariot automoteur muni d'un organe élévateur apte à se glisser sous la charge pour la soulever, ledit chariot (figures 3 à 5) étant agencé pour venir se placer sous la charge et comportant des moyens d'attelage (figures 6 et 7) à des chariots identiques pour constituer des files linéaires de chariots (figure 2) ; une machine d'accumulation (M, figure 1) étant agencée pour stocker un nombre prédéterminé de files linéaires en couches superposées ou, de préférence, juxtaposées, ladite machine étant munie de moyens de déplacement autonome (91-96, figures 8 à 10) et de moyens ($E_a$, $E_b$, figure 2) de positionnement par rapport aux charges et de contrôle du gabarit de celles-ci, et le procédé comportant successivement :

— le contrôle (a — figure 1) de la mise en place des charges pour qu'elles couvrent une bande de rangement allongée (figure 2) dont la longueur correspond à celle d'une file de chariots et la largeur, à celle de l'espace occupé par lesdites files de chariots lorsqu'elles sont déployées à partir de la machine d'accumulation, l'axe longitudinal de ladite bande coïncidant avec celui d'un véhicule à charger ou à décharger ou celui de toute autre aire de transfert ;

— la mise en place (b — figure 1) de la machine d'accumulation (M) remplie desdites files de chariots à l'arrière des charges ainsi préparées et dans l'axe de ladite bande ;

— l'extraction des files de chariots de la machine d'accumulation et leur mise en place sous les charges (c — figure 1), par commande de la mise en service des moteurs desdits chariots ;

— la mise en position haute des organes élévateurs des chariots pour soulever les charges (d — figure 1) ;

— le déplacement simultané, vers l'avant pour un chargement, vers l'arrière pour un déchargement, suivant l'axe de ladite bande, de l'ensemble des files de chariots chargés et de la machine d'accumulation (e — figure 1) ; et

— à la fin du transfert, la remise des organes élévateurs des chariots en position basse (f — figure 1) et la réintroduction des files de chariots dans la machine d'accumulation (g — figure 1).

2. Procédé selon la revendication 1, dans lequel les charges sont des palettes destinées à un transport par camion en deux ou, respectivement, trois trains juxtaposés, caractérisé en ce que deux files de chariots sont prévues pour chaque train (figure 2) et déployées de manière à pénétrer dans deux entrées respectives des palettes, la machine d'accumulation étant alors agencée pour stocker deux ou, respectivement, trois files de chariots.

3. Procédé selon la revendication 2, caractérisé en ce que les chariots des files extrêmes du chargement ($F_a$, $F_b$, figure 2) ont des organes élévateurs qui effectuent un soulèvement plus important que celui effectué par les organes élévateurs des files de chariots intermédiaires.

4. Machine d'accumulation à être mise en œuvre dans une installation de manutention et de transfert de charges telles que palettes et containers munis de pieds, comportant la mise en œuvre d'un chariot automateur muni d'un organe élévateur apte à se glisser sous la charge pour la soulever, ledit chariot (figures 3 à 5) étant agencé pour venir se placer sous la charge et comportant des moyens d'attelage (figures 6 et 7) à des chariots identiques pour constituer des files linéaires de chariots (figure 2), ladite machine (M, figure 1) étant agencée pour stocker un nombre prédéterminé de files linéaires en couches superposées ou, de préférence, juxtaposées, et munie de moyens de déplacement autonome (91-96, figures 8 à 10) et de moyens ($E_a$, $E_b$, figure 2) de positionnement par rapport aux charges et de contrôle du gabarit de celles-ci, caractérisée en ce que ladite machine comporte un tambour cylindrique allongé rotatif (102) et des moyens d'amarrage des files de chariots en des points (ABCDEF) répartis suivant une génératrice du cylindre, l'agencement étant tel que lesdites files s'enroulent sur ledit tambour par bandes hélicoïdales juxtaposées entre elles, que ladite machine comporte en outre un poste de pilotage et de commande et des organes d'alimentation en énergie des moteurs des chariots par conducteurs ou conduites souples et de commande de la mise en service desdits moteurs et des organes élévateurs des chariots, et que lesdits moyens de positionnement comportent un dispositif émetteur de deux faisceaux laser ($E_a$, $E_b$, figure 2) effectuant deux balayages respectifs dans deux plans verticaux parallèles qui encadrent ladite bande de rangement, et agencé pour permettre la vérification du positionnement de la machine d'accumulation par rapport à ladite bande de transfert, du gabarit des charges et de la coïncidence de l'axe du véhicule avec celui de la bande de rangement.

5. Machine d'accumulation selon la revendication 4, caractérisée en ce que chacun desdits chariots d'une file linéaire comporte un moyen (32) de contrôle de la position horizontale dudit organe élévateur, lequel est de façon connue en soi, constitué par un plateau de levage (31) et un moyen de coupure de l'alimentation des moteurs de levage dès que l'inclinaison dudit plateau dépasse une valeur prédéterminée.

6. Machine d'accumulation selon la revendication 4, caractérisée en ce que chacun desdits organes élévateurs comprend quatre biellettes (56-59) montées folles sur les axes des roues (50-53) du chariot et deux traverses (46-47) solidaires d'axes (44-45) déplacés en translation, chacune desdites traverses coopérant avec une paire de biellettes pour soulever ladite paire.

7. Machine d'accumulation selon la revendication 4, caractérisée en ce que lesdits moyens d'attelage des chariots comportent des traits d'union (60, figures 6-7) articulés verticalement (en 61-62) aux extrémités respectives des chariots consécutifs ($B_1$, $B_2$) de la file et sont agencés pour qu'une fois la file déployée, une rigidité linéaire soit assurée afin d'éviter des écarts angulaires par rapport à l'axe de la file, tandis qu'une certaine mobilité verticale sera autorisée par les articulations.

## Claims

1. A method of handling and transferring loads such as pallets and containers provided with feet, comprising the use of a self-propelled truck having an elevator means adapted for sliding under the load in order to raise it, said truck (Figs. 3 to 5) being adapted so as to come into position under the load and comprising means for coupling (Figs. 6 and 7) to identical trucks so as to form linear rows of trucks (Fig. 2), an accumulation machine (M, Fig. 1) being adapted for storing a predetermined number of linear rows in superimposed or, preferably, juxtaposed layers, said machine being provided with self-contained moving means (91-96, Figs. 8 to 10) and means ($E_a$, $E_b$, Fig. 2) for positioning it with respect to the loads and for controlling the dimensions thereof, which method comprises successively :

— checking (a-Fig. 1) the positioning of the loads so that they cover an elongate storage strip (Fig. 2) whose length corresponds to that of a row of trucks and whose width corresponds to that of the space occupied by said rows of trucks when they are deployed from the accumulation machine, the longitudinal axis of said strip coinciding with that of a vehicle to be loaded or unloaded or that of any other transfer area ;

— positioning (b-Fig. 1) of the accumulation machine (M) filled with said rows of trucks behind the loads thus prepared and in the axis of said strip ;

— removal of the rows of trucks from the accumulation machine and positioning thereof under the loads (c-Fig. 1) by controlling the actuation of the motors of said trucks ;

— placing the elevator means of the trucks in the high position for raising the loads (d-Fig. 1) ;

— the simultaneous movement, forwards for loading and rearwards for unloading, along the axis of said strip, of the whole of the rows of loaded trucks and of the accumulation machine (e-Fig. 1) ; and

— at the end of the transfer, return of the elevator means of the trucks to the low position (f-Fig. 1) and reintroduction of the rows of trucks into the accumulation machine (g-Fig. 1).

2. The method as claimed in claim 1, wherein the loads are pallets intended to be transported by heavy trucks in two or, respectively, three juxtaposed trains, characterized in that two rows of trucks are provided for each train (Fig. 2) and deployed so as to penetrate into two respective entries of the pallets, the accumulation machine then being adapted for storing two, or respectively three rows of trucks.

3. The method as claimed in claim 2, wherein the trucks of the endmost rows of the load ($F_a$, $F_b$, Fig. 2) have elevator means which effect a greater lift than that provided by the elevator means of the intermediate rows of trucks.

4. An accumulation machine for being put into operation in an installation for handling and transferring loads such as pallets and containers provided with feet, comprising the use of a self-propelled truck having an elevator means adapted for sliding under the load in order to raise it, said truck (Figs. 3 to 5) being adapted so as to come into position under the load and comprising means for coupling (Figs. 6 and 7) to identical trucks so as to form linear rows of trucks (Fig. 2), said machine (M, Fig. 1) being adapted for storing a predetermined number of linear rows in superimposed or, preferably, juxtaposed layers, said machine being provided with self-contained moving means (91-96, Figs. 8 to 10) and means ($E_a$, $E_b$, Fig. 2) for positioning it with respect to the loads and for controlling the dimensions thereof, said machine comprising an elongate rotary cylindrical drum (102) and means for attaching rows of trucks at points (ABCDEF) spaced apart along a generatrix of the cylinder, the arrangement being such that said rows are wound on said drum in helical mutually juxtaposed lines, said machine further comprising a drive and control station and means for supplying the motors of the trucks with power by conductors or flexible pipes and for controlling the actuation of said motors and of the elevator means of the trucks, and in that said positioning means comprise a device emitting two laser beams ($E_a$, $E_b$, Fig. 2) making two respective sweeps in two parallel vertical planes which define said storage strip, and adapted for checking the positioning of the accumulation machine with respect to said transfer strip, the dimensions of the loads and the coincidence of the axis of the vehicle with that of the storage strip.

5. The accumulation machine as claimed in claim 4, characterized in that each truck of a linear row comprises a means (32) for checking the horizontal position of said elevator means which is, in a way known per se, formed by an elevator platform (31) and a means for cutting off the power supply to the lifting motors as soon as the slope of said platform exceeds a predetermined value.

6. The accumulation machine as claimed in claim 4, characterized in that each of the elevator means comprises four links (56-59) mounted for free rotation on the shafts of the wheels (50-53) of the truck and two cross pieces (46-47) integral with shafts (44-45) moved in translation, each of said cross pieces cooperating with a pair of links for raising said pair.

7. The accumulation machine according to claim 4, characterized in that said coupling means of the trucks comprise hyphens (60, Figs. 6-7) mounted for vertical pivoting (at 61-62) at the respective ends of the consecutive trucks ($B_1$, $B_2$) of the row and are adapted so that once the row is deployed, a linear rigidity is ensured so as to avoid angular deviations with respect to the axis of the row, whereas a certain vertical mobility will be provided by the articulations.

**Patentansprüche**

1. Verfahren zur Handhabung und Übergabe von Lasten, wie zum Beispiel mit Füssen versehenen Paletten oder Transportbehältern, bei dem ein Wagen mit Eigenantrieb verwendet wird, der mit einem Hubelement versehen ist, welches unter die Last geschoben werden kann, um diese anzuheben, wobei besagter Wagen (Fig. 3 bis 5) so ausgelegt ist, dass er unter die Last gebracht werden kann und Mittel (Fig. 6 und 7) enthält, um ihn mit Wagen der gleichen Art zu koppeln, um lineare Wagenreihen zu bilden (Fig. 2) ; eine Sammelmachine (M, Fig. 1) ist so ausgelegt, dass sie eine vorbestimmte Anzahl von linearen Reihen in übereinanderliegenden Schichten oder, vorzugsweise, nebeneinander speichern kann, wobei besagte Machine mit Mitteln zu ihrer selbstständigen Bewegung (91-96, Fig. 8 bis 10) versehen ist und mit Mitteln ($E_a$, $E_b$, Fig. 2) zu ihrer Anordnung im Verhältnis zu den Lasten und zur Kontrolle der Ausmasse derselben, und sich im Verfahren folgende Vorgänge nacheinander abwickeln :

— die Kontrolle (a-Fig. 1) der Ablage der Lasten, damit sie eine längliche Ablagebahn bedecken (Fig. 2), deren Länge der einer Wagenreihe entspricht und deren Breite dem Raum entspricht, den besagte Wagenreihen einnehmen, wenn sie aus der Sammelmaschine ausgefahren sind, wobei die Längsachse der besagten Bahn mit der des zu be- oder entladenden Fahrzeugs oder irgendeiner anderen Übergabefläche zusammenfällt ;

— die Anordnung (b-Fig. 1) der mit den besagten Wagenreihen gefüllten Sammelmaschine (M) hinter den so vorbereiteten Lasten und in der Achse der besagten Bahn ;

— das Herausfahren der Wagenreihen aus der Sammelmachine und ihre Anordnung unter den Lasten (c-Fig. 1) durch Einsatz der Motoren der besagten Wagen ;

— die Anhebung in die obere Stellung der Hubelemente der Wagen zur Anhebung der Lasten (d-Fig. 1) ;

— die gleichzeitige Verschiebung, nach vorne zum Beladen, nach hinten zum Entladen, gemäss der Achse der besagten Bahn, aller beladenen Wagen und der Sammelmaschine (e-Fig. 1) ; und

— am Ende der Übergabe, die Rückstellung der Hubelemente der Wagen in die untere Stellung (f-Fig. 1) und die Wiedereinführung der Wagenreihen in die Sammelmaschine (g-Fig. 1) ;

2. Verfahren nach Anspruch 1, bei dem die Lasten Paletten sind, die per Lastwagen in zwei oder jeweils drei nebeneinander angeordneten Ketten transportiert werden sollen, dadurch gekennzeichnet, dass zwei Wagenreihen für jede Kette vorgesehen sind (Fig. 2) und so ausgefahren werden, dass sie in zwei jeweilige Eingänge der Paletten eindringen, in welchem Falle die Sammelmaschine so ausgelegt ist, dass sie zwei, bzw. drei Wagenreihen speichern kann.

3. Verfahren nach Anspruch 2, dadurch gekennzeichnet, dass die Wagen der äussersten Lastenreihen ($F_a$, $F_b$, Fig. 2) Hubelemente besitzen, welche einen grösseren Hub ausführen als der der Hubelemente der mittleren Wagenreihen.

4. Sammelmaschine, die in einer Einrichtung zur Handhabung und Übergabe von Lasten wie zum Beispiel mit Füssen versehenen Paletten und Transportbehältern verwendet wird, unter Benutzung eines Wagens mit Eigenantrieb, welcher mit einem Hubelement versehen ist, das unter die Last geschoben werden kann, um sie anzuheben, wobei besagter Wagen (Fig. 3 bis 5) so ausgelegt ist, dass er unter die Last gebracht werden kann, und Mittel (Fig. 6 und 7) enthält, um ihn mit gleichartigen Wagen zu koppeln, um lineare Wagenreihen (Fig. 2) zu bilden, wobei besagte Maschine (M, Fig. 1) so ausgelegt ist, dass sie eine vorbestimmte Anzahl von linearen Reihen in übereinanderliegenden Schichten oder vorzugsweise nebeneinander speichern kann, und mit Mitteln zur selbstständigen Bewegung (91-96, Fig. 8 bis 10) und Mitteln ($E_a$, $E_b$, Fig. 2) zur Anordnung der Maschine im Verhältnis zu den Lasten und zur Kontrolle der Ausmasse derselben versehen ist, dadurch gekennzeichnet, dass besagte Maschine eine längliche walzenförmige Drehtrommel (102) enthält und Mittel, um die Wagenreihen an Stellen (ABCDEF) zu befestigen, welche entlang einer Mantellinie der Walze angeordnet sind, wobei die Anordnung so ausgeführt ist, dass besagte Reihen auf besagte Trommel in spiralförmigen, jeweils nebeneinanderliegenden Bahnen aufgerollt werden, dass besagte Maschine ausserdem eine Antriebs- und Steuerstation und Mittel zur Energieversorgung der Wagenmotoren, durch Leiter oder flexible Leitungen, besitzt, und Mittel zum Einsatz der besagten Motoren und Hubelemente der Wagen und dass besagte Anordnungsmittel eine Vorrichtung zur Aussendung von zwei Laserstrahlen ($E_a$, $E_b$, Fig. 2) enthalten, die jeweils zwei Abtastungen in zwei parallelen, senkrechten Ebenen vornehmen, welche besagte Anordnungsbahn begrenzen und so ausgelegt ist, dass sie eine Kontrolle der Anordnung der Sammelmaschine im Verhältnis zur besagten Übergabebahn ermöglicht, sowie die Kontrolle der Ausmasse der Lasten und der Übereinstimmung der Fahrzeugachse mit der Achse der Anordnungsbahn.

5. Sammelmaschine nach Anspruch 4, dadurch gekennzeichnet, dass jeder Wagen einer linearen Reihe ein Mittel (32) aufweist, um die waagerechte Stellung des besagten Hubelementes zu kontrollieren, das in bekannter Weise aus einer Hubplattform (31) besteht und einem Mittel, um die Versorgung des Hubmotors zu unterbrechen, sobald die Neigung der besagten Plattform einen bestimmten Wert überschreitet.

6. Sammelmaschine nach Anspruch 4, dadurch gekennzeichnet, dass jedes der besagten Hubelemente vier Schwingarme (56-59) enthält, die frei schwingbar auf den Achsen der Räder (50-53) der Wagen angeordnet sind und zwei, mit den Achsen (44-45) fest verbundene, Querstücke (46-47), die quer bewegt werden, wobei jedes der besagten Querstücke mit zwei Schwingarmen zusammenarbeitet, um diese anzuheben.

7. Sammelmaschine nach Anspruch 4, dadurch gekennzeichnet, dass besagte Mittel zur Kuppelung der Wagen Verbindungsstücke (60, Fig. 6-7) aufweisen, die (bei 61-62) senkrecht beweglich an den jeweiligen Enden der aufeinderfolgenden Wagen ($B_1$, $B_2$) der Reihe angeordnet sind und so ausgelegt sind, dass, wenn die Reihe ausgefahren ist, die lineare Unbeweglichkeit erreicht wird, um Winkelverschiebungen im Verhältnis zur Reihenachse zu vermeiden, während die Gelenke eine gewisse senkrechte Beweglichkeit ermöglichen.

0 198 738

FIG.1

a)

b)

c)

d)

e)

f)

g)

h)

1

## FIG. 2

FIG. 3

FIG. 4

FIG. 5

0 198 738

FIG. 6

B₁      B₂

61     60     62

FIG. 7

B₁      B₂

60

61      62

0 198 738

FIG.8

FIG.10

FIG.9

0 198 738